# EUROPÄISCHE PATENTSCHRIFT

(11) **EP 1 602 879 B1**
(45) Veröffentlichungstag und Bekanntmachung des Hinweises auf die Patenterteilung: **10.03.2010**
(21) Anmeldenummer: 05104803.1
(22) Anmeldetag: 02.06.2005
(51) Int. Cl.: F21V 25/00, F21S 8/10, H01J 61/02, H01R 13/648, H01R 4/64, H01R 13/04, B60Q 1/00

(54) **Scheinwerfer für Fahrzeuge mit abgeschirmeten Gehäuse für die Vorschalteinrichtung der Gasentladungslampe**
Headlamp for vehicles with a shielding housing for the ballast unit of the discharge lamp
Projecteur pour véhicules avec un boitier isolant pour le régulateur de puissance de la lampe à décharge

(30) Priorität: 05.06.2004 DE 102004027602
(43) Veröffentlichungstag der Anmeldung: 07.12.2005
(73) Patentinhaber: Hella KGaA Hueck & Co., 59552 Lippstadt (DE)
(72) Erfinder: Gösling, Markus c/o Hella KGaA Hueck & Co., 59558, Lippstadt (DE); Heitbreder, Volker c/o Hella KGaA Hueck & Co., 59494, Soest (DE)

(56) Entgegenhaltungen:
- EP-A- 1 458 061
- EP-A1- 0 703 639
- DE-A1- 4 135 020
- DE-A1- 4 342 978
- DE-A1- 19 737 640
- JP-A- 8 315 631
- JP-A- 2000 173 311
- US-A- 5 267 125

## Beschreibung

Die Erfindung betrifft einen Scheinwerfer für Fahrzeuge nach dem Oberbegriff des Patenanspruchs 1.

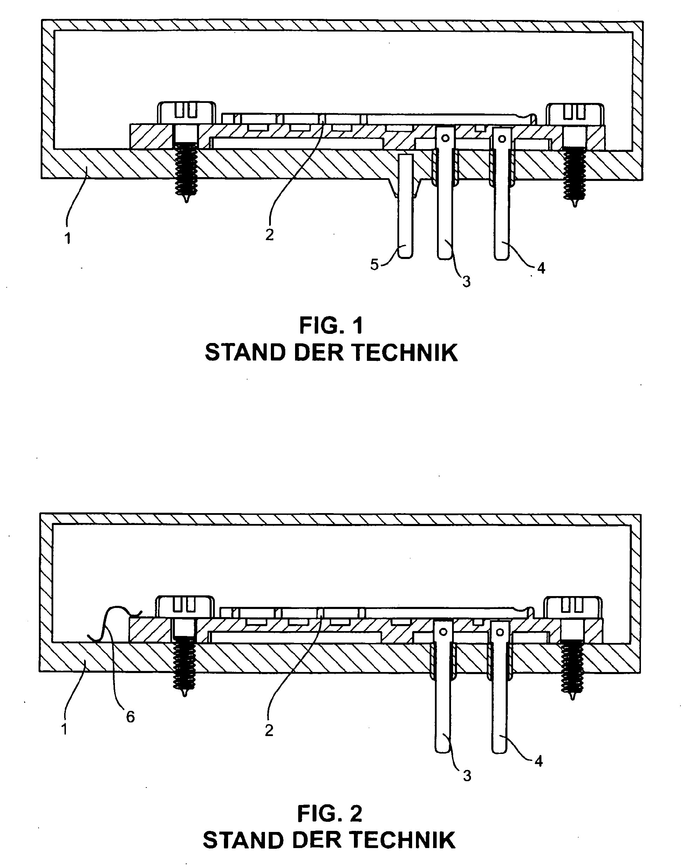

Seit einiger Zeit sind Scheinwerfer für Fahrzeuge bekannt, die als Lichtquelle eine Gasentladungslampe aufweisen. Zur Erzeugung einer relativ hohen Zündspannung für die Gasentladungslampe ist eine elektronische Schaltung erforderlich, die den vom Bordnetz zur Verfügung gestellten Gleichstrom in einen Wechselstrom vorgegebener Höhe und Frequenz umformt. Die elektronische Schaltung ist in einer Vorschalteinrichtung untergebracht, die üblicher Weise über ein abgeschirmtes Gehäuse verfügt. Wie aus Figur 1 zu ersehen ist, kann ein Gehäuse 1 aus einem Metallmaterial bestehen und eine elektronische Schaltung 2 zum Betreiben der Gasentladungslampe vollständig umschließen. Zur elektrischen Stromversorgung der elektronischen Schaltung 2 ragen auf einer Seite des Gehäuses 1 zum einen ein Masse-Kontaktstift 3 sowie ein weiterer Kontaktstift 4 ab, wobei der Masse-Kontaktstift 3 mit dem Minuspol und der weitere Kontaktstift 4 mit dem Pluspol des Bordnetzes verbunden ist. Die Kontaktstifte 3, 4 sind auf einer der elektronischen Schaltung zugewandten Seite mit entsprechenden Leiterbahnen derselben elektrisch leitend verbunden. Gegenüber einer Wandung des Gehäuses 1 sind sie mittels in Öffnungen der Wandung des Gehäuses eingefasster Hülsen elektrisch isolierend angeordnet. Zur Minimierung der elektromagnetischen Störstrahlung ist das Gehäuse 1 über ein elektrisch leitend mit demselben verbundenen Kontaktstift 5 mit einem Masseanschluss des Fahrzeugs verbindbar.

Nach einer alternativen bekannten Massekontaktierung des Gehäuses gemäß Figur 2 kann eine elektrische Verbindung zwischen Leiterbahnen der elektronischen Schaltung 2 und der Innenseite des Gehäuses 1 anstatt eines zusätzliches Massekontaktstiftes innerhalb des Gehäuses 1 mittels Bonden hergestellt werden.

Mit dem Vorsehen von zusätzlichen Kontaktmitteln 5, 6 ist die Massekontaktierung des Gehäuses 1 jedoch relativ aufwändig.

Aus der JP 2000 173311 A ist ein Scheinwerfer für Fahrzeuge bekannt, bei der ein Abschirmungsabschnitt eines Reflektors mit einer abgeschirmten Anschlussdose der Lichtquelle über einen Lichtquellenkörper durch Kontaktmittel miteinander verbunden ist. Hierdurch braucht die Anschlussdose sowie die Abschirmung für die Anschlussdose nicht separat montiert werden. Die abgeschirmte Anschlussdose ist mit einem Masse-Kontaktstift einer elektronischen Schaltung verbunden.

Aus der DE 43 42 978 A1 ist ein Scheinwerfer für Fahrzeuge mit einer Gasentladungslampe und einer Vorschalteinrichtung zum Betreiben der Gasentladungslampe bekannt, wobei die Vorschalteinrichtung ein abgeschirmtes Gehäuse zur Abschirmung von elektromagnetischer Störstrahlung aufweist. Innerhalb des Gehäuses ist eine elektronische Schaltung auf einer Leiterplatte angeordnet. Zum elektrischen Anschluss der Gasentladungslampe an die Vorschalteinrichtung ist auf einer der Leiterplatte gegenüberliegenden Seite des Gehäuses ein Steckeinsatz vorgesehen, der mit einem fest mit einer zur Gasentladungslampe führenden Leitung verbundenen Steckerteil elektrisch und mechanisch kontaktierbar ist. Innerhalb des Steckanschlusses ist eine Mehrzahl von elektrisch leitenden Steckkontakten angeordnet, die mit der elektronischen Schaltung der Leiterplatte elektrisch verbunden sind. Ein der Leiterplatte gegenüberliegendes Ende der Kontaktstifte ist innerhalb des Gehäuses und beabstandet zu einer Wandung des Gehäuses positioniert. Durch Einsetzen des Steckerteils in eine Öffnung der Gehäusewandung kann eine elektrische Verbindung zu dem Kontaktstift hergestellt werden. Zur Abschirmung elektromagnetischer Strahlung sind die Kontaktstifte von einer metallischen Umhüllung umfasst, die sich quasi durchgehend zwischen der Leiterplatte und der den Steckeinsatz aufnehmenden Gehäusewandung erstreckt. Nachteilig an dem bekannten Scheinwerfer ist, dass die Abschirmung elektromagnetischer Strahlung im Bereich von Kontaktstiften relativ aufwendig ist. Den Kontaktstiften ist jeweils eine metallische Umhüllung zugeordnet, die an dem Steckeinsatz und der Gehäusewandung befestigt sein muss.

Aufgabe der vorliegenden Erfindung ist es daher, einen Scheinwerfer für Fahrzeuge mit einer Vorschalteinrichtung zum Betreiben einer Gasentladungslampe Aufgabe der vorliegenden Erfindung ist es daher, einen Scheinwerfer für Fahrzeuge mit einer Vorschalteinrichtung zum Betreiben einer Gasentladungslampe derart weiterzubilden, dass der Aufwand zur Massekontaktierung eines Gehäuses der Vorschalteinrichtung weiter reduziert wird.

Zur Lösung dieser Aufgabe weist die Erfindung die Merkmale des Patenanspruchs 1 auf.

Der besondere Vorteil der Erfindung ergibt sich daraus, dass ein Masseanschlusselement der elektronischen Schaltung einer Vorschalteinrichtung zusätzlich als Massekontaktmittel für das Gehäuse der Vorschalteinrichtung eingesetzt wird. Hierzu ist das als Masse-Kontaktstift ausgebildete Masseanschlusselement der elektrischen Schaltung derart ausgebildet, dass eine elektrisch leitende Verbindung von demselben nicht nur zur elektronischen Schaltung, sondern auch zu einer Wandung des Gehäuses besteht. Dem mit dem Minuspol des Bordnetzes verbundenen Masse-Kontaktstift der Vorschalteinrichtung kommt somit eine Doppelfunktion zu. Vorteilhaft kann hierdurch eine relativ kurze Masseanbindung des Gehäuses an einen Masseanschluss hergestellt werden. Zusätzliche Kontaktmittel - wie beim Stand der Technik oben beschrieben - sind nicht erforderlich.

Nach einer Weiterbildung der Erfindung weist der Masse-Kontaktstift im Bereich einer Wandungsöffnung des Gehäuses einen Verbreiterungsabschnitt auf. Der Verbreiterungsabschnitt ist derart geformt, dass der Masse-Kontaktstift form- und/oder kraftschlüssig in der Wandungsöffnung des Gehäuses gehalten ist. Hierzu kann der Verbreiterungsabschnitt federnde Außenabschnitte aufweisen, die an einer umlaufenden Wand der Wandungsöffnung des Gehäuses anliegen.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: einen schematischen Querschnitt durch eine Vorschalteinrichtung mit einer Masseanbindung für ein Gehäuse derselben nach einer ersten Variante des Standes der Technik,
- Figur 2: einen schematischen Querschnitt durch eine Vorschalteinrichtung mit einer Masseanbindung für ein Gehäuse derselben nach einer zweiten Variante des Standes der Technik und

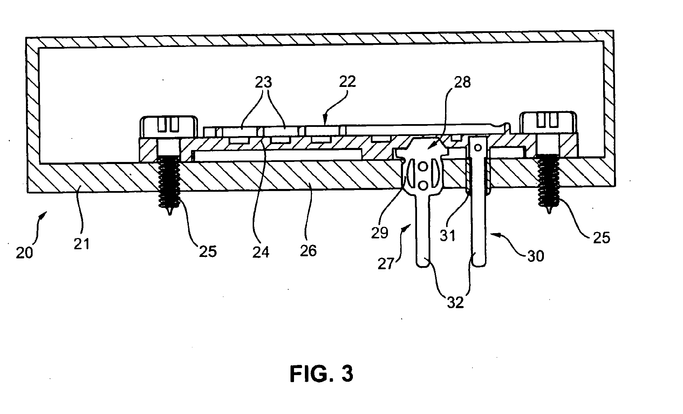

- Figur 3: einen schematischen Querschnitt durch eine erfindungsgemäße Vorschalteinrichtung.

Eine erfindungsgemäße Vorschalteinrichtung 20 zum Betreiben einer nicht dargestellten Gasentladungslampe eines Scheinwerfers kann ein quaderförmiges Gehäuse 21 aus einem Metallmaterial aufweisen. Zur Erzeugung einer relativ hohen Zündspannung weist die Vorschalteinrichtung 20 eine elektronische Schaltung 22 auf, deren elektronische Bauteile 23 auf einer gemeinsamen Trägerplatte 24 untergebracht sind. Die Trägerplatte 24 ist über als Schrauben ausgebildete Befestigungsmittel 25 kraftschlüssig mit einer Basiswandung 26 des Gehäuses 21 bzw. mit einer an dieselbe anschließenden Gehäusewandung des Scheinwerfers verbunden. Die Vorschalteinrichtung 20 kann unmittelbar an dem Gehäuse des Scheinwerfers befestigt sein, der neben der Gasentladungslampe in üblicher Weise einen Reflektor sowie eine klare Abdeckscheibe in Lichtaustrittsrichtung aufweist.

Zur elektromagnetischen Abschirmung des Gehäuses 21 ist dasselbe aus einem Metallwerkstoff, beispielsweise Aluminium, hergestellt. Zur Masseanbindung des Gehäuses 21 dient als Kontaktierungsmittel ein Masseanschlusselement/Masse-Kontaktstift 27, der darüber hinaus als Masseanschluss für die elektronische Schaltung 22 an einem Minuspol des Bordnetzes des Fahrzeuges dient. Der Masse-Kontaktstift 27 weist ist im Bereich einer Öffnung der Basiswandung 26 einen Verbreiterungsabschnitt 28 auf, mittels dessen er an der Basiswandung 26 bzw. der Trägerplatte 24 form- und/oder kraftschlüssig gehalten ist. Beispielsweise kann der Verbreiterungsabschnitt 28 federnde Außenabschnitte (Außenfläche) aufweisen, mittels derer er in der Öffnung unter Anlage an einer umlaufenden Wand der Öffnung der Basiswandung 26 klemmend angeordnet ist. Hierdurch ist eine direkte elektrisch leitende Verbindung zwischen dem Masse-Kontaktstift 27 und der Basiswandung 26 gegeben.

Ein sich an den Verbreiterungsabschnitt 28 anschließender, sich im Wesentlichen außerhalb des Gehäuses 21 erstreckender zungenförmiger Außenabschnitt 32 weist die gleiche Form auf wie ein entsprechender Außenabschnitt eines benachbarten weiteren Kontaktstiftes 30, der als Anschluss der elektrischen Schaltung 22 an einem Pluspol des Bordnetzes dient. Die Kontaktstifte 27, 30 (Flachstecker) können zur Kontaktierung beispielsweise mit einem nicht dargestellten Stecker verbunden werden. Im Unterschied zu dem Masse-Kontaktstift 27 ist der weitere Kontaktstift 30 mittels in einer sich innerhalb einer Öffnung der Basiswandung 26 erstreckenden elektrisch nicht leitenden Hülse 31 eingefasst, wobei lediglich ein der elektronischen Schaltung 22 zugewandtes Ende des Kontaktstiftes 30 elektrisch leitend mit nicht dargestellten Leiterbahnen der elektronischen Schaltung 22 verbunden ist.

Die Kontaktstifte 27, 30 erstrecken sich im Wesentlichen parallel durch benachbarte Öffnungen der Basiswandung 26 und weisen im Wesentlichen die gleiche Länge auf. Die Kontaktstifte 27, 30 bestehen aus einem Metallwerkstoff.

Die Vorschalteinrichtung 20 kann nach einer alternativen Ausführungsform auch zweiteilig ausgebildet sein, wobei eine Zündeinheit zur Erzeugung der erforderlichen Zündspannung der Gasentladungslampe und eine der Zündeinheit vorgelagerte Steuereinheit zur Erzeugung eines Betriebsstromes dienen. Die Zündeinheit kann beispielsweise an einer Rückseite eines Reflektors angeordnet sein.

## Patentansprüche

1. Scheinwerfer für Fahrzeuge mit einer Gasentladungslampe, mit einem Reflektor, der eine Reflektoröffnung zur Aufnahme der Gasentladungslampe aufweist, mit einer Vorschalteinrichtung (20) zum Betreiben der Gasentladungslampe enthaltend ein abgeschirmtes Gehäuse (21) zur Abschirmung von elektromagnetischer Störstrahlung, in dem eine elektronische Schaltung (22) angeordnet ist, dass Kontaktmittel (27) vorgesehen sind zur Kontaktierung des Gehäuses (21) an einem Masseanschluss des Fahrzeugs, **dadurch gekennzeichnet, dass** das Kontaktmittel als ein aus dem Gehäuse (21) herausführender Masse-Kontaktstift (27) der elektronischen Schaltung (22) ausgebildet ist, der in einem elektrisch leitenden Kontakt zu einer Basiswandung (26) des Gehäuses (21) steht.

2. Scheinwerfer nach Anspruch 1 oder 2, **dadurch gekennzeichnet, dass** der Masse-Kontaktstift (27) im Bereich einer Öffnung des Gehäuses (21) einen Verbreiterungsabschnitt (28) aufweist.

3. Scheinwerfer nach Anspruch 1 oder 2, **dadurch gekennzeichnet, dass** die Außenfläche des Verbreiterungsabschnittes (28) direkt an einer umlaufenden Wand einer Öffnung des Gehäuses (21) anliegt.

4. Scheinwerfer nach einem der Ansprüche 1 bis 3, **dadurch gekennzeichnet, dass** der Masse-Kontaktstift (27) form- und/oder kraftschlüssig in der Öffnung und/oder an einer Trägerplatte (24) der elektronischen Schaltung (22) gehalten ist.

5. Scheinwerfer nach einem der Ansprüche 1 bis 4, **dadurch gekennzeichnet, dass** der Masse-Kontaktstift (27) parallel und in der Nähe zu einem weiteren Kontaktstift (30) verläuft.

6. Scheinwerfer nach einem der Ansprüche 1 bis 5, **dadurch gekennzeichnet, dass** das Gehäuse (21) quaderförmig ausgebildet ist und über Befestigungsmittel (25) verfügt zur Anbindung an ein Bauteil des Scheinwerfers.

## Claims

1. Headlamp for vehicles comprising a gas discharge lamp, a reflector with an opening for holding the gas discharge lamp, a ballast unit (20) for operating the gas discharge lamp, where the ballast unit (20) comprises a shielded body (21) as a shield against electromagnetic interference and an electronic circuit arrangement (22), and further comprising contact elements (27) for making electrical contact between the body (21) and a chassis ground connector of the vehicle, **characterized in that** the contact element is designed as a chassis contact pin (27) protruding from the body (21) around the electronic circuit arrangement (22) such that it makes electrically conductive contact with a base wall (26) of the body (21).

2. Headlamp of claim 1, **characterized in that** the chassis contact pin (27) has a broader section (28) near an opening of the body (21).

3. Headlamp of claim 1 or 2, **characterized in that** the outer surface of the broader section (28) immediately contacts a circumferential wall of an opening of the body (21).

4. Headlamp of claims 1 to 3, **characterized in that** the chassis contact pin (27) form-fits and/or force-fits the opening and/or a base plate (24) of the electronic circuit arrangement (22).

5. Headlamp of claims 1 to 4, **characterized in that** the chassis contact pin (27) is parallel to another nearby contact pin (30).

6. Headlamp of claims 1 to 5, **characterized in that** the body (21) is shaped like a cube and has means (25) of connecting it to a headlamp component.

## Revendications

1. Projecteur pour véhicules avec une ampoule à décharge de gaz, avec un réflecteur qui présente une ouverture de réflecteur pour le logement de l'ampoule à décharge de gaz, avec un dispositif à ballast (20) pour le fonctionnement de l'ampoule à décharge de gaz comprenant un boîtier blindé (21) pour le blindage du rayonnement perturbateur électromagnétique, dans lequel se trouve un circuit électronique (22), de manière que des moyens de contact (27) sont prévus pour la mise sous contact du boîtier (21) à un raccord de masse du véhicule, **caractérisé en ce que** le moyen de contact consiste en une broche de contact de masse (27) du circuit électronique (22) sortant du boîtier (21), laquelle broche se trouve dans un contact électriquement conducteur par rapport à une paroi de base (26) du boîtier (21).

2. Projecteur selon la revendication 1 ou 2, **caractérisé en ce que** la broche de contact de masse (27) présente une section élargie (28) dans la zone d'une ouverture du boîtier (21).

3. Projecteur selon la revendication 1 ou 2, **caractérisé en ce que** la surface extérieure de la section élargie (28) prend directement appui sur une paroi de pourtour d'une ouverture du boîtier (21).

4. Projecteur selon l'une des revendications 1 à 3, **caractérisé en ce que** la broche de contact de masse (27) est maintenue par la forme et/ou par l'adhérence dans l'ouverture et/ou sur une plaque support (24) du circuit électronique (22).

5. Projecteur selon l'une des revendications 1 à 4, **caractérisé en ce que** la broche de contact de masse (27) est parallèle à et à proximité d'une autre broche de contact (30).

6. Projecteur selon l'une des revendications 1 à 5, **caractérisé en ce que** le boîtier (21) présente une forme carrée et qu'il dispose d'un moyen de fixation (25) pour le rattachement à un composant du projecteur.
